# EUROPEAN PATENT APPLICATION

(11) **EP 4 265 851 A1**
(43) Date of publication of application: **25.10.2023**
(21) Application number: 21906299.9
(22) Date of filing: 26.11.2021
(51) Int. Cl.: E02F 9/00, B60R 16/04

(54) **ELECTRIC WORK MACHINE**

(30) Priority: 17.12.2020 JP 2020209240
(71) Applicant: KUBOTA CORPORATION, Osaka-shi, Osaka 556-8601 (JP)
(72) Inventor: TAKAKI Takahiro, Sakai-shi, Osaka 590-0823 (JP); YAMANAKA Yukifumi, Sakai-shi, Osaka 590-0823 (JP); KISHIMOTO Akihiro, Sakai-shi, Osaka 590-0823 (JP)
(74) Representative: Cabinet Beau de Loménie
(86) International application number: PCT/JP2021/043403
(87) International publication number: WO 2022/130936

(57) **Abstract**

An electric working machine (1) includes battery packs (31, 32), a working device (20, 10) to be driven by electric power discharged from the battery packs (31, 32), one or more battery monitors (31b, 32b) to monitor states of the battery packs (31, 32), and a controller (7) to control charging and discharging of the battery packs (31, 32), wherein, in a discharging mode for driving the working device (20, 10), the controller (7) selects one of the battery packs (31, 32) as a discharging battery pack for supplying electric power to the working device (20, 10), based on a result of monitoring the battery packs (31, 32) by the one or more battery monitors (31b, 32b), and in a charging mode, the controller (7) selects one of the battery packs (31, 32) as a charging battery pack to be charged, based on a result of monitoring the battery packs (31, 32) by the one or more battery monitors (31b, 32b).

## Description

### Technical Field

The present invention relates to an electric working machine to be operated by electric power of a battery.

### Background Art

PTL 1 discloses an electric construction machine provided with a plurality of battery packs (battery systems) such that one of the battery packs is selected and discharged or charged.

### Citation List

### Patent Literature

PTL 1: Japanese Patent No. 5778752

### Summary of Invention

### Technical Problem

In the technique in PTL 1, however, the battery pack to be charged or discharged is manually selected or automatically switched in a predetermined order (in the order of a first battery system and a second battery system). In some cases, the plurality of battery packs cannot be efficiently used.

The present invention has been made to address such problems of the related art, and an object thereof is to efficiently use a plurality of battery packs. Solution to Problem

An electric working machine according to an aspect of the present invention includes: battery packs; a working device to be driven by electric power discharged from the battery packs; one or more battery monitors to monitor states of the battery packs; and a controller to control charging and discharging of the battery packs, wherein, in a discharging mode for driving the working device, the controller selects one of the battery packs as a discharging battery pack to be discharged to supply electric power to the working device, based on a result of monitoring the battery packs by the one or more battery monitors, and in a charging mode for charging the battery packs, the controller selects one of the battery packs as a charging battery pack to be charged, based on the result of monitoring the battery packs by the one or more battery monitors.

In an aspect of the present invention, the one or more battery monitors monitor remaining power levels of the battery packs. The controller selects, in the discharging mode, one of the battery packs that has a highest remaining power level as the discharging battery pack.

In an aspect of the present invention, in the discharging mode, the controller switches the discharging battery pack to one of other one or more of the battery packs that has a highest remaining power level when the remaining power level of the one of the battery packs used as the discharging battery pack decreases to a first threshold or less, the other one or more of the battery packs being other than the one of the battery packs used as the discharging battery pack.

In an aspect of the present invention, the one or more battery monitors monitor remaining power levels of the battery packs. The controller selects, in the charging mode, one of the battery packs that has a lowest remaining power level as the charging battery pack.

In an aspect of the present invention, in the charging mode, the controller switches the charging battery pack to one of other one or more of the battery packs that has a lowest remaining power level when the remaining power level of the charging battery pack being charged becomes greater than or equal to a second threshold, the other one or more of the battery packs being other than the charging battery pack.

In an aspect of the present invention, the one or more battery monitors monitor the battery packs for abnormality. The controller selects, as the discharging battery pack or the charging battery pack, one of one or more of the battery packs that have no abnormality.

In an aspect of the present invention, the electric working machine further includes a charging port to be connected to an external power supply. The controller determines that the electric working machine is in the charging mode when the external power supply is connected to the charging port, and determines that the electric working machine is in the discharging mode when the external power supply is not connected to the charging port.

In an aspect of the present invention, the electric working machine, further includes a mode changeover switch to input an instruction to switch between the discharging mode and the charging mode.

In an aspect of the present invention, the electric working machine further includes a starter switch to start the electric working machine. The controller selects the discharging battery pack or the charging battery pack based on the result of monitoring the states of the battery packs acquired from the one or more battery monitors, in response to a predetermined operation on the starter switch to give an instruction to start the electric working machine.

### Advantageous Effects of Invention

The configuration described above enables effective use of a plurality of battery packs in the electric working machine.

### Brief Description of Drawings

[FIG. 1] FIG. 1 is an electrical block diagram of an electric working machine.
[FIG. 2] FIG. 2 is a hydraulic circuit diagram of the electric working machine.
[FIG. 3] FIG. 3 is a layout diagram of components in a machine body of the electric working machine.
[FIG. 4A] FIG. 4A is a flowchart illustrating a charge/discharge target selecting operation of the electric working machine.
[FIG. 4B] FIG. 4B is a flowchart illustrating a charge/discharge target selecting operation of the electric working machine.
[FIG. 5] FIG. 5 is a flowchart illustrating a charge/discharge target switching operation of the electric working machine.
[FIG. 6] FIG. 6 is an overall side view of the electric working machine. Description of Embodiments

An embodiment of the present invention will be described hereinafter with reference to the drawings.

First, an overall configuration of an electric working machine 1 will be described.

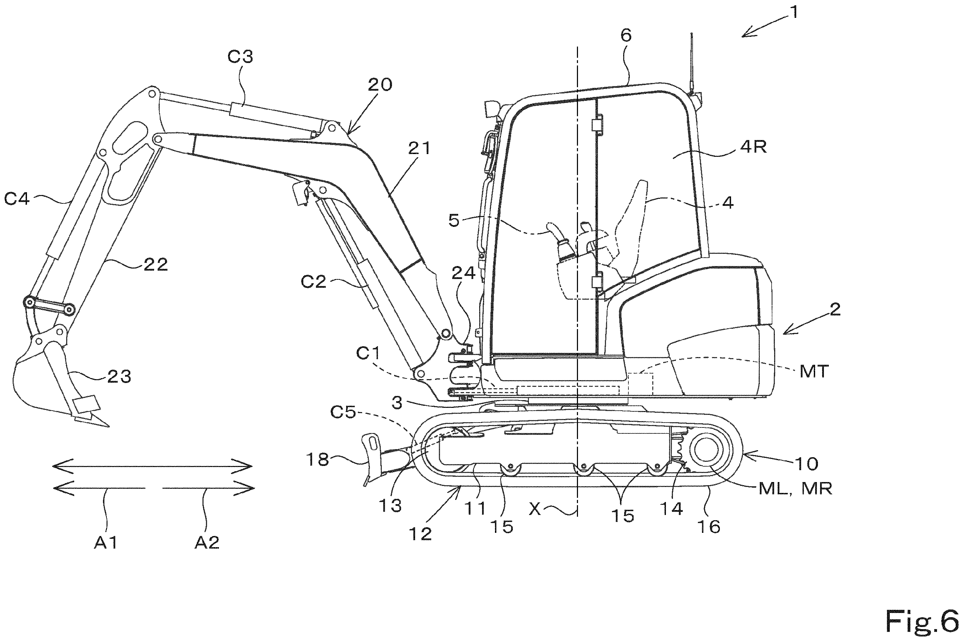

FIG. 6 is an overall side view of the electric working machine 1.

The electric working machine 1 is a backhoe. The electric working machine 1 includes a machine body (swivel base) 2, a traveling device 10, a working device 20, and so on. The machine body 2 has mounted thereon an operator's seat 4 on which an operator sits and a protection mechanism 6 that protects the operator's seat 4 from front and rear, right and left, and above.

The protection mechanism 6 is also called a cabin. The protection mechanism 6 has a frame attached to the machine body 2, a roof attached to an upper portion of the frame, and a plurality of side walls attached to of a front portion, a rear portion, and left and right side portions of the frame, respectively (not illustrated in detail). Each of the side walls has a transparent portion (so-called window) through which the surroundings are viewable from the operator's seat 4. The protection mechanism 6 having such a configuration separates the space around the operator's seat 4 from the outside. That is, the protection mechanism 6 forms an operator's cab 4R having the operator's seat 4.

An operation device 5 is disposed around the operator's seat 4 inside the protection mechanism 6 (in the operator's cab 4R) to operate the electric working machine 1. The operator can operate the operation device 5 while seated on the operator's seat 4.

In the present embodiment, a description will be made defining a direction extending from the front of the operator seated on the operator's seat 4 (arrow A1 direction in FIG. 6) as the front direction and a direction extending from the rear of the operator (arrow A2 direction in FIG. 6) as the rear direction. The description will be made defining, further, a horizontal direction orthogonal to the front-rear direction as the width direction. The description will be made defining, further, a direction extending from the left of the operator facing the front A1 when the operator is sitting on the operator's seat 4 as the left direction and a direction extending from the right of the operator as the right direction.

The traveling device 10 is a device that causes the machine body 2 to travel, and includes a traveling frame 11 and at least one traveling mechanism 12. The traveling frame (track frame) 11 is a structure having the traveling mechanism 12 attached therearound and having an upper portion for supporting the machine body 2.

The traveling mechanism 12 is, for example, a crawler traveling mechanism. The traveling mechanism 12 is disposed on each of the left and right sides of the traveling frame 11. Each of the traveling mechanisms 12 includes an idler 13, a drive wheel 14, a plurality of track rollers 15, an endless crawler belt 16, and a traveling motor (left traveling motor ML or right traveling motor MR).

The idler 13 is arranged in a front portion of the traveling frame 11. The drive wheel 14 is arranged in a rear portion of the traveling frame 11. The plurality of track rollers 15 are disposed between the idler 13 and the drive wheel 14. The crawler belt 16 is wound around the idler 13, the drive wheel 14, and the track rollers 15.

The left traveling motor ML is included in the traveling mechanism 12 on the left side of the traveling frame 11. The right traveling motor MR is included in the traveling mechanism 12 on the right side of the traveling frame 11. The traveling motors ML and MR include hydraulic motors. In each of the traveling mechanisms 12, the drive wheel 14 is rotatably driven by the power of the corresponding one of the traveling motors ML and MR to circularly move the crawler belt 16 in the circumferential direction.

A dozer blade 18 is mounted on the front portion of the traveling device 10. The dozer blade 18 swings up and down in response to expansion and contraction of a dozer cylinder C5. The dozer cylinder C5 is attached to the support frame 11. The dozer cylinder C5 includes a hydraulic cylinder.

The machine body 2 is supported on the traveling frame 11 via a swivel bearing 3 so as to be rotatable about a swivel axis X. A swivel motor MT is disposed inside the machine body 2. The swivel motor MT includes a hydraulic motor (hydraulic actuator included in a hydraulic device). The machine body 2 swivels about the swivel axis X by the power of the swivel motor MT.

The working device 20 is supported at the front portion of the machine body 2. The working device 20 includes a boom 21, an arm 22, a bucket (working tool) 23, and hydraulic cylinders C1 to C4. The boom 21 has a proximal end pivotally attached to a swing bracket 24 so as to be rotatable around a horizontal axis (axis extending in the width direction of the machine body 2). Accordingly, the boom 21 is swingable in the up-down direction (vertical direction). The arm 22 is pivotally attached to a distal end of the boom 21 so as to be rotatable around the horizontal axis. Accordingly, the arm 22 is swingable in the front-rear direction or the up-down direction. The bucket 23 is disposed at the distal end of the arm 22 so as to be capable of shoveling and dumping.

Instead of or in addition to the bucket 23, another working tool (hydraulic attachment) that can be driven by the hydraulic actuator is mountable on the electric working machine 1. Examples of the other working tool include a hydraulic breaker, a hydraulic crusher, an angle broom, an earth auger, a pallet fork, a sweeper, a mower, and a snow blower.

The swing bracket 24 swings right and left in response to expansion and contraction of the swing cylinder C1 included in the machine body 2. The boom 21 swings up and down (back and forth) in response to expansion and contraction of the boom cylinder C2. The arm 22 swings up and down (back and forth) in response to expansion and contraction of the arm cylinder C3. The bucket 23 performs shoveling and dumping in response to expansion and contraction of the bucket cylinder (working tool cylinder) C4. The swing cylinder C1, the boom cylinder C2, the arm cylinder C3, and the bucket cylinder C4 each include a hydraulic cylinder.

The working machine 1 performs work using the traveling device 10 including the traveling motors ML and MR and the hydraulic cylinders C1 to C5 described above, the working device 20, and the swivel motor MT. The hydraulic actuators, such as the traveling motors ML and MR, the swivel motor MT, and the hydraulic cylinders C1 to C5, are included in hydraulic devices. The traveling device 10 is also a working device included in the working machine 1.

Next, an electrical configuration of the electric working machine 1 will be described.

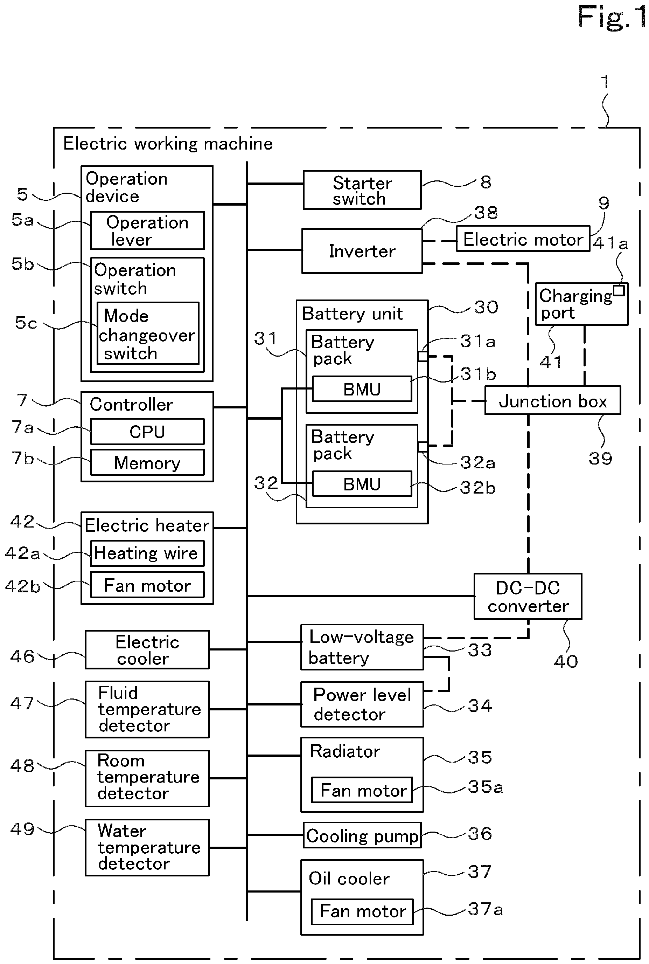

FIG. 1 is an electrical block diagram of the electric working machine 1.

The operation device 5 of the electric working machine 1 has at least one operation lever 5a and an operation switch 5b. The operation lever 5a and the operation switch 5b can be operated by an operator seated on the operator's seat 4. In FIG. 1, the operation lever 5a and the operation switch 5b are each illustrated as a single block for simplicity. In actuality, however, a plurality of operation levers 5a and a plurality of operation switches 5b are disposed. The operation switch 5b includes a mode changeover switch 5c.

A controller 7 is disposed in the machine body 2 or inside the protection mechanism 6, and includes a CPU 7a and a memory 7b. The CPU 7a controls the operation of the components included in the electric working machine 1, as illustrated in FIG. 1. The memory 7b includes a memory and the like. The memory 7b stores, in a readable and writable manner, information, data, programs, and so on for the CPU 7a to control the operation of the components.

A starter switch 8 is disposed inside the protection mechanism 6 and can be operated by the operator seated on the operator's seat 4. The starter switch 8 is operated to start or stop the electric working machine 1. Specifically, the starter switch 8 is turned on, thereby allowing the controller 7 to start the components included in the electric working machine 1. The starter switch 8 is turned off, thereby allowing the controller 7 to stop the components included in the electric working machine 1.

An electric motor 9 is a drive source of the electric working machine 1 and includes a permanent-magnet-embedded three-phase AC synchronous motor, for example. An inverter 38 is a motor driver that drives the electric motor 9. The inverter 38 is connected to the electric motor 9 and a junction box 39.

The junction box 39 is connected to, in addition to the inverter 38, a battery unit 30, a DC-DC converter 40, and a charging port 41. The junction box 39 outputs electric power output from the battery unit 30 to the inverter 38 and the DC-DC converter 40.

The inverter 38 converts DC power input from the battery unit 30 through the junction box 39 into three-phase AC power and supplies the three-phase AC power to the electric motor 9. Accordingly, the electric motor 9 is driven. Further, the inverter 38 can adjust the current and voltage of the electric power to be supplied to the electric motor 9, as appropriate. The controller 7 controls the operation of the inverter 38 to drive or stop the electric motor 9.

The DC-DC converter 40 is a voltage converter that converts a DC voltage input from the battery unit 30 through the junction box 39 into a different voltage. In the present embodiment, the DC-DC converter 40 is a step-down converter that converts a high voltage of the battery unit 30 into a predetermined low voltage corresponding to electrical components included in the electric working machine 1. The DC-DC converter 40 supplies electric power to a low-voltage battery 33 after voltage conversion. The electrical components include, for example, the controller 7, fan motors 35a, 37a, and 42b, and other devices 41a, 42, and 46 to 49, which will be described below.

The charging port 41 includes a connector (not illustrated) into which a charging cable (not illustrated) is fitted, and a connection detection sensor 41a. An external power supply (such as a commercial power supply) is connected to the charging port 41 via the charging cable. The connection detector 41a is a sensor or the like that detects a connection of the external power supply to the charging port 41 into which the charging cable is fitted.

The junction box 39 outputs, to the battery unit 30, electric power input from the external power supply via the charging cable through the charging port 41. The battery unit 30 is charged with the electric power input from the charging port 41 via the junction box 39.

The battery unit 30 includes a plurality of battery packs 31 and 32. Each of the battery packs 31 and 32 is a secondary battery (storage battery) such as a lithium ion battery including at least one battery. When each of the battery packs 31 and 32 includes a plurality of batteries, the plurality of batteries are electrically connected in series and/or in parallel. The battery included in each of the battery packs 31 and 32 has a plurality of cells therein, and the plurality of cells are electrically connected in series and/or in parallel. Each of the battery packs 31 and 32 has an electric capacity with which the components of the electric working machine 1 can run for a predetermined amount of time. The battery packs 31 and 32 are connected to each other in parallel.

In the present embodiment, the battery unit 30 includes two battery packs 31 and 32. However, the number of battery packs included in the battery unit 30 is not limited to two, and may be three or more.

The battery packs 31 and 32 are provided with connection switches 31a and 32a, respectively. Each of the connection switches 31a and 32a includes a relay, a switch, or the like, for example, and is switchable between a connected state and a disconnected state.

The controller 7 switches one of the connection switches 31a and 32a to the connected state and switches the other connection switch to the disconnected state, thereby outputting electric power from one of the plurality of battery packs 31 and 32 to the junction box 39 and stopping outputting electric power from the other battery pack. That is, the controller 7 controls output and stop of output of electric power from each of the battery packs 31 and 32.

Further, the controller 7 switches the connection state inside the junction box 39 to connect or disconnect the inverter 38, the DC-DC converter 40, or the charging port 41 to or from each of the battery packs 31 and 32. The junction box 39 and the connection switches 31a and 32a define a connection switching device that switches between connection and disconnection of the inverter 38, the DC-DC converter 40, and the charging port 41 to and from each of the battery packs 31 and 32.

The battery packs 31 and 32 are also provided with BMUs (battery management units; battery monitors) 31b and 32b, respectively. In FIG. 1, the BMUs 31b and 32b are disposed in the battery packs 31 and 32, respectively. However, the BMUs 31b and 32b may be incorporated in the battery packs 31 and 32, respectively, or may be disposed outside the battery packs 31 and 32.

The BMU 31b monitors and controls the corresponding battery pack 31. The BMU 32b monitors and controls the corresponding battery pack 32. Specifically, the BMUs 31b and 32b control the opening and closing of relays included inside the battery packs 31 and 32 to control the start and stop of the supply of electric power from the battery packs 31 and 32. Further, the BMUs 31b and 32b detect the temperatures, voltages, currents, the terminal voltages of the internal cells, or the like of the battery packs 31 and 32.

Further, the BMUs 31b and 32b detect the remaining power levels of the battery packs 31 and 32 by a voltage measurement method based on, for example, the terminal voltages of the internal cells of the battery packs 31 and 32. The method for detecting the remaining power levels of the battery packs 31 and 32 is not limited to the voltage measurement method. Any other method such as a coulomb counter method, a cell modeling method, or an impedance track method may be used. Alternatively, capacity detectors that detect the remaining power levels of the battery packs 31 and 32 may be disposed separately from the BMUs 31b and 32b.

The low-voltage battery 33 is a storage battery having a voltage lower than that of the battery unit 30. The low-voltage battery 33 is charged with electric power supplied from the DC-DC converter 40. The low-voltage battery 33 supplies electric power to electrical components included in the electric working machine 1. A power level detector 34 includes an electric circuit that detects the remaining power level of the low-voltage battery 33.

A radiator 35 cools cooling water for cooling high-heat-generating electric devices, such as the electric motor 9, the inverter 38, the DC-DC converter 40, and the battery unit 30. The high-heat-generating electric devices are electric devices that generate higher heat than other electric devices included in the electric working machine 1 by being operated by electric power. The cooling water is not simply water, and includes a liquid that does not freeze even in a cold environment, for example.

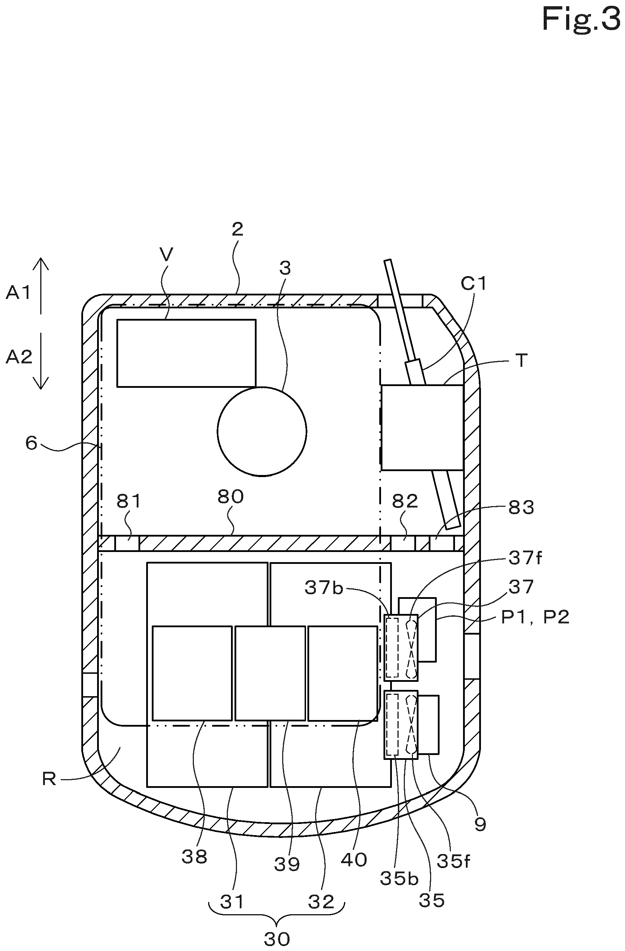

The radiator 35 includes a fan motor 35a. The radiator 35 further includes a radiator fan 35f that is rotatably driven by the power of the fan motor 35a, and a heat exchanger 35b (illustrated in FIG. 3 described below). The fan motor 35a is driven by the electric power of the low-voltage battery 33.

A cooling pump 36 is disposed in a cooling water passage (not illustrated) provided in the machine body 2, together with the radiator 35 and the high-heat-generating electric devices described above. The cooling pump 36 delivers and circulates cooling water through the cooling water passage.

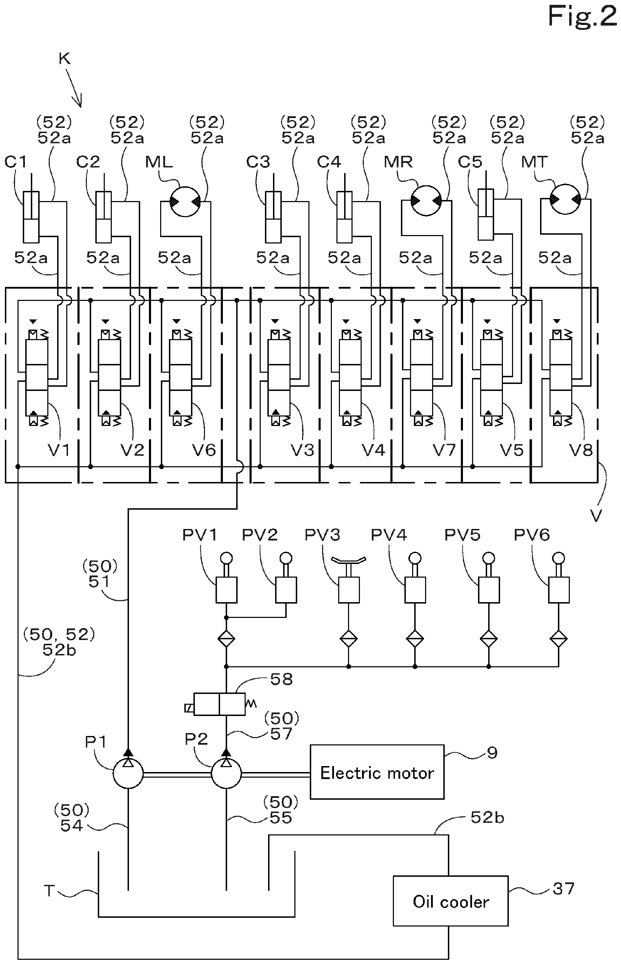

An oil cooler 37 cools hydraulic fluid that has passed through hydraulic devices, such as the hydraulic actuators ML, MR, MT, and C1 to C5 described above, and hydraulic pumps P1 and P2 and a control valve unit V (illustrated in FIG. 2 and so on) described below. The oil cooler 37 includes a fan motor 37a. The oil cooler 37 further includes an oil cooler fan 37f that is rotatably driven by the power of the fan motor 37a, and a heat exchanger 37b (illustrated in FIG. 3 described below). The fan motor 37a is driven by the electric power of the low-voltage battery 33.

An electric heater 42 is driven by the electric power of the low-voltage battery 33 to heat the inside of the protection mechanism 6. The electric heater 42 is an electrical heater and includes a heating wire 42a, a fan motor 42b, and a heating fan (not illustrated). The heating wire 42a generates high heat by being supplied with electric power. The fan motor 42b rotatably drives the heating fan. The heating fan blows the ambient air heated by the heating wire 42a toward the inside of the protection mechanism 6. The fan motor 42b is driven by the electric power of the low-voltage battery 33.

An electric cooler 46 includes, for example, an air conditioner. The electric cooler 46 is driven by the electric power of the low-voltage battery 33 to cool the inside of the protection mechanism 6. The electric heater 42 and the electric cooler 46 are air-conditioners that perform air-conditioning inside the protection mechanism 6.

A fluid temperature detector 47 is a sensor that detects the temperature of the hydraulic fluid (fluid temperature). A room temperature detector 48 is a sensor that detects the temperature (room temperature) of the inside of the protection mechanism 6. A water temperature detector 49 is a sensor that detects the temperature of the cooling water (water temperature).

Next, a hydraulic circuit included in the electric working machine 1 will be described.

FIG. 2 is a diagram illustrating a hydraulic circuit K included in the electric working machine 1.

The hydraulic circuit K includes hydraulic devices such as the hydraulic actuators C1 to C5, ML, MR, and MT, the control valve unit V, the hydraulic pumps P1 and P2, a hydraulic fluid tank T, the oil cooler 37, operation valves PV1 to PV6, an unloading valve 58, and a fluid passage 50.

One of the plurality of hydraulic pumps P1 and P2 is an operating hydraulic pump P1, and the other is a control hydraulic pump P2. The hydraulic pumps P1 and P2 are driven by the power of the electric motor 9.

The operating hydraulic pump P1 sucks in the hydraulic fluid stored in the hydraulic fluid tank T and then delivers the hydraulic fluid toward the control valve unit V. In FIG. 2, one operating hydraulic pump P1 is illustrated for simplicity. However, this does not imply any limitation, and it is desirable that an appropriate number of operating hydraulic pumps P1 be disposed such that hydraulic fluid can be supplied to the hydraulic actuators C1 to C5, ML, MR, and MT.

The control hydraulic pump P2 sucks in and then delivers the hydraulic fluid stored in the hydraulic fluid tank T to output a hydraulic pressure for signal or control. That is, the control hydraulic pump P2 supplies (delivers) pilot fluid. It is desirable that an appropriate number of control hydraulic pumps P2 be disposed.

The control valve unit V includes a plurality of control valves V1 to V8. The control valves V1 to V8 control (adjust) the flow rates of the hydraulic fluid to be output from the hydraulic pumps P1 and P2 to the hydraulic actuators C1 to C5, ML, MR, and MT.

Specifically, the swing control valve V1 controls the flow rate of the hydraulic fluid to be supplied to the swing cylinder C1. The boom control valve V2 controls the flow rate of the hydraulic fluid to be supplied to the boom cylinder C2. The arm control valve V3 controls the flow rate of the hydraulic fluid to be supplied to the arm cylinder C3. The bucket control valve V4 controls the flow rate of the hydraulic fluid to be supplied to the bucket cylinder C4. The dozer control valve V5 controls the flow rate of the hydraulic fluid to be supplied to the dozer cylinder C5. The left travel control valve V6 controls the flow rate of the hydraulic fluid to be supplied to the left traveling motor ML. The right travel control valve V7 controls the flow rate of the hydraulic fluid to be supplied to the right traveling motor MR. The swing control valve V8 controls the flow rate of the hydraulic fluid to be supplied to the swivel motor MT.

The operation valves PV1 to PV6 are actuated in accordance with operations of the operation levers 5a (FIG. 1) included in the operation device 5. The pilot fluid acts on the control valves V1 to V8 in proportion to the amounts of movement (operation amounts) of the operation valves PV1 to PV2, thus moving spools of the control valves V1 to V8. The hydraulic fluid in amounts proportional to the amounts of movement of the spools of the control valves V1 to V8 is supplied to the hydraulic actuators C1 to C5, ML, MR, and MT to be controlled. Further, the hydraulic actuators C1 to C5, ML, MR, and MT are driven in accordance with the amounts of hydraulic fluid supplied from the control valves V1 to V8.

In other words, the operation levers 5a are operated, thereby adjusting the hydraulic fluid (pilot fluid) acting on the control valves V1 to V8 and controlling the control valves V1 to V8. The amounts of the hydraulic fluid to be supplied from the control valves V1 to V8 to the hydraulic actuators C1 to C5, ML, MR, and MT are adjusted to control the driving and stopping of the hydraulic actuators C1 to C5, ML, MR, and MT.

The fluid passage 50 includes, for example, a hose or a pipe formed of a material such as metal. The fluid passage 50 is a flow passage that connects the components of the hydraulic circuit K and allows hydraulic fluid or pilot fluid to flow to the components. The fluid passage 50 includes a first fluid passage 51, a second fluid passage 52, a first suction fluid passage 54, a second suction fluid passage 55, and a limiting fluid passage 57.

The first suction fluid passage 54 is a flow passage through which the hydraulic fluid sucked in from the hydraulic fluid tank T by the operating hydraulic pump P1 flows. The second suction fluid passage 55 is a flow passage through which the hydraulic fluid sucked in from the hydraulic fluid tank T by the control hydraulic pump P2 flows.

The first fluid passage 51 is a flow passage through which the hydraulic fluid delivered from the operating hydraulic pump P1 flows toward the control valves V1 to V8 of the control valve unit V The first fluid passage 51 branches into a plurality of passages in the control valve unit V, and the passages are connected to the respective control valves V1 to V8.

The second fluid passage 52 is a flow passage through which the hydraulic fluid having passed through the control valves V1 to V8 flows toward the hydraulic fluid tank T. The hydraulic fluid tank T stores hydraulic fluid. The second fluid passage 52 includes reciprocating fluid passages 52a and a discharge fluid passage 52b.

A plurality of reciprocating fluid passages 52a are disposed such that pairs of two reciprocating fluid passages 52a connect the control valves V1 to V8 to the hydraulic actuators C1 to C5, ML, MR, and MT to be controlled, respectively. The reciprocating fluid passage 52a are flow passages through which the hydraulic fluid is supplied from the control valves V1 to V8 connected thereto to the hydraulic actuators C1 to C5, ML, MR, and MT or through which the hydraulic fluid is returned from the hydraulic actuators C1 to C5, ML, MR, and MT to the control valves V1 to V8. One end of the discharge fluid passage 52b branches into a plurality of passages, and the passages are connected to the respective control valves V1 to V8. The other end of the discharge fluid passage 52b is connected to the hydraulic fluid tank T.

A portion of the hydraulic fluid flowing to one of the control valves V1 to V8 through the first fluid passage 51 passes through the one of the control valves V1 to V8, and is supplied to a corresponding one of the hydraulic actuators C1 to C5, ML, MR, and MT to be controlled passes through one of the paired reciprocating fluid passages 52a. The hydraulic fluid discharged from the corresponding one of the hydraulic actuators C1 to C5, ML, MR, and MT returns to the connected one of the control valves V1 to V8 through the other reciprocating fluid passage 52a, and flows to the discharge fluid passage 52b through the one of the control valves V1 to V8.

The remaining portion of the hydraulic fluid flowing to the one of the control valves V1 to V8 through the first fluid passage 51 passes through the one of the control valves V1 to V8 and flows to the discharge fluid passage 52b without being supplied to the corresponding one of the hydraulic actuators C1 to C5, ML, MR, and MT. The oil cooler 37 is disposed in the discharge fluid passage 52b. The oil cooler 37 cools the hydraulic fluid flowing thereto from one of the control valves V1 to V8 through the discharge fluid passage 52b.

The hydraulic fluid cooled by the oil cooler 37 returns to the hydraulic fluid tank T through the discharge fluid passage 52b. As described above, the fluid passages 54, 51, and 52 are provided so as to circulate the hydraulic fluid to the hydraulic fluid tank T, the hydraulic pump P1, and the control valves V1 to V8 of the control valve unit V (a portion of the hydraulic fluid is also circulated through the hydraulic actuators C1 to C5, ML, MR, and MT).

The limiting fluid passage 57 is a flow passage through which the hydraulic fluid delivered from the control hydraulic pump P2 flows to the operation valves PV1 to PV6. One end of the limiting fluid passage 57 is connected to the control hydraulic pump P2, and the other end thereof branches into a plurality of passages such that the passages are connected to ports on the primary side (primary ports) of the operation valves PV1 to PV6.

The unloading valve 58 is disposed in the limiting fluid passage 57. The unloading valve 58 blocks the supply of the hydraulic fluid from the operating hydraulic pump P1 to the hydraulic actuators C1 to C5, ML, MR, and MT to prohibit or limit the driving of the hydraulic actuators C1 to C5, ML, MR, and MT, that is, the driving of the working device 20.

Specifically, the unloading valve 58 is switched between a supply position and a blocking position in response to operation of an unload lever (not illustrated) included in the operation levers 5a. The unloading valve 58 is switched to the supply position, thereby supplying, to the operation valves PV1 to PV6, the hydraulic fluid delivered from the control hydraulic pump P2 to the limiting fluid passage 57. As a result, the operation of the control valves V1 to V8 is enabled. Accordingly, the operation of the hydraulic actuators C1 to C5, ML, MR, and MT, the working device 20, and the traveling device 10 is also enabled. The hydraulic fluid discharged from the operation valves PV1 to PV6 returns to the hydraulic fluid tank T through another discharge fluid passage (not illustrated).

By contrast, the unloading valve 58 is switched to the blocking position, thereby discharging, to the hydraulic fluid tank T, the hydraulic fluid delivered from the control hydraulic pump P2 to the limiting fluid passage 57 and preventing the supply (stopping the supply) of the hydraulic fluid to the operation valves PV1 to PV6. As a result, the operation of the control valves V1 to V8 is prohibited or restricted. Accordingly, the operation of the hydraulic actuators C1 to C5, ML, MR, and MT, the working device 20, and the traveling device 10 is also prohibited or restricted.

Next, the layout of components in the machine body 2 of the electric working machine 1 will be described.

FIG. 3 is a diagram illustrating an example layout of components in the machine body 2 of the electric working machine 1. FIG. 3 illustrates the inside of the machine body 2 when viewed from above. In the machine body 2, the control valve unit V is arranged in front (in the A1 direction) of the swivel bearing 3. The hydraulic fluid tank T is arranged to the right of the swivel bearing 3 above the swing cylinder C1. A partition plate 80 is disposed behind (in the A2 direction of) the swivel bearing 3 in parallel with the width direction of the machine body 2. The partition plate 80 partitions an internal space of the machine body 2 into front and rear portions.

A rear room R is disposed behind (in the A2 direction of) the partition plate 80. The rear room R includes the battery unit 30, the inverter 38, the junction box 39, the DC-DC converter 40, the hydraulic pumps P1 and P2, the electric motor 9, the radiator 35, the oil cooler 37, and so on.

The battery packs 31 and 32 included in the battery unit 30 are arranged side by side in the width direction of the machine body 2. The inverter 38, the junction box 39, and the DC-DC converter 40 are arranged above the battery packs 31 and 32.

The hydraulic pumps P1 and P2, the electric motor 9, the radiator 35, and the oil cooler 37 are arranged to the right of the battery unit 30. The electric motor 9 is arranged behind the hydraulic pumps P1 and P2. The radiator 35 is arranged above the electric motor 9. The heat exchanger 35b of the radiator 35 is arranged closer to the battery unit 30 than the radiator fan 35f. The oil cooler 37 is arranged above the hydraulic pumps P1 and P2. The heat exchanger 37b of the oil cooler 37 is arranged closer to the battery unit 30 than the oil cooler fan 37f.

The partition plate 80 has formed therein a plurality of through-holes 81, 82, and 83. For example, a hose (not illustrated), which forms the fluid passage 50, electric wiring, and the like are inserted into the through-holes 81, 82, and 83. The through-holes 81, 82, and 83 may be used as vents. The protection mechanism 6 (the operator's cab 4R) is mounted above the machine body 2.

Next, the operation of the electric working machine 1 will be described.

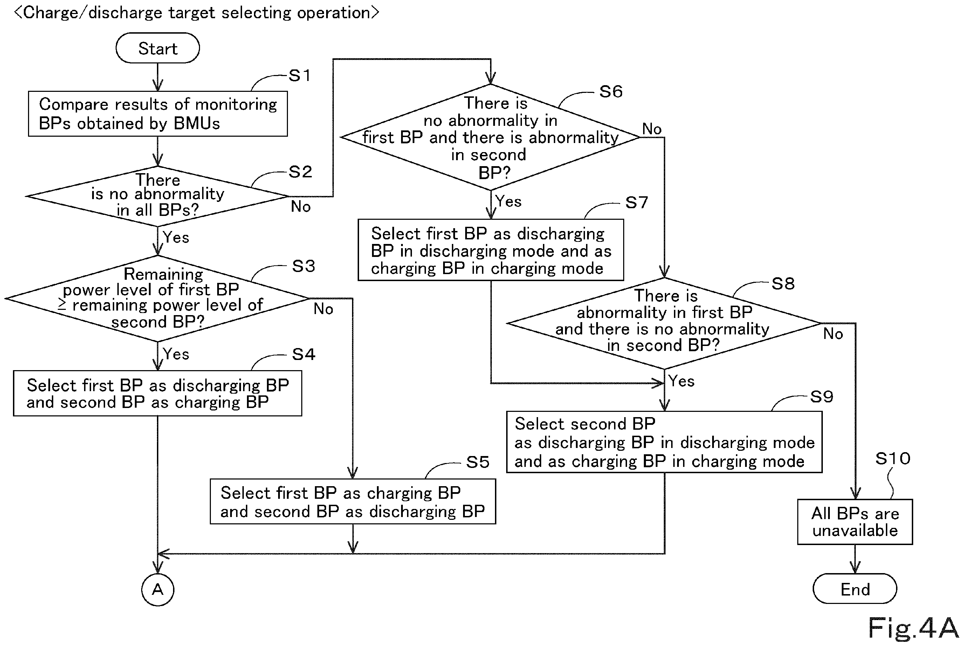

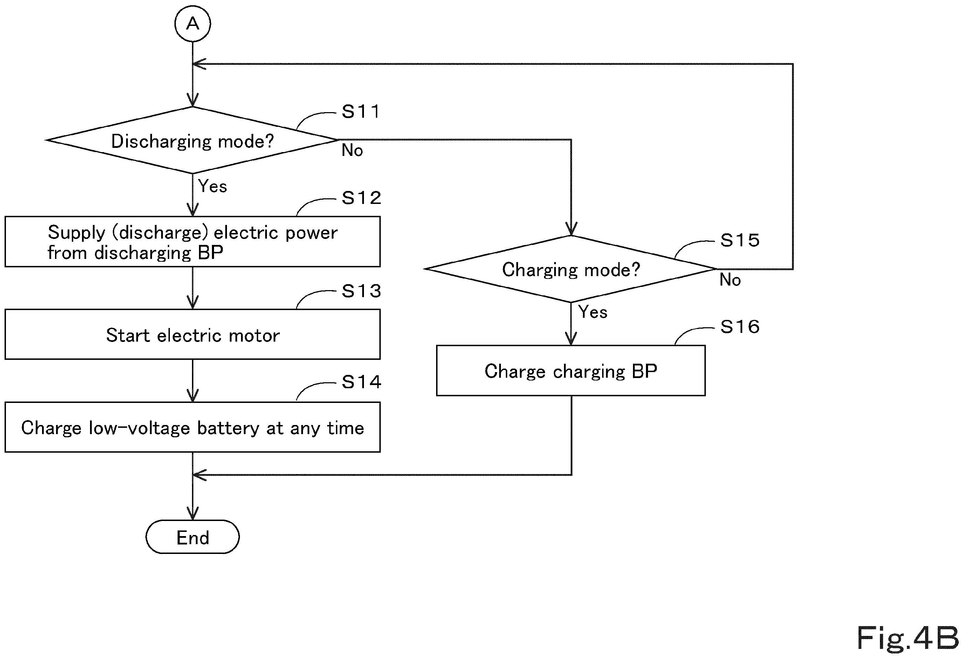

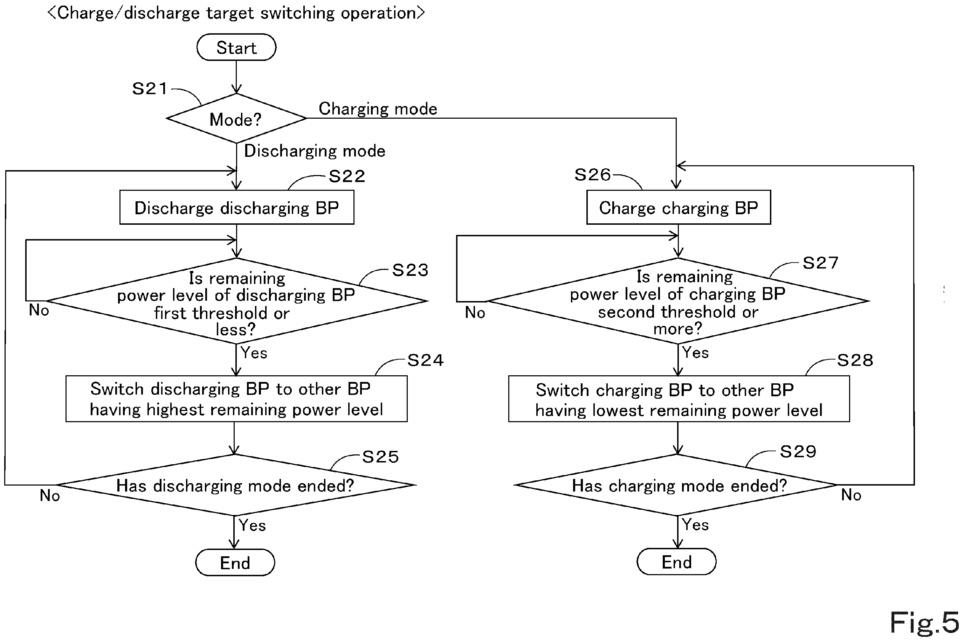

FIGS. 4A and 4B are a flowchart illustrating a charge/discharge target selecting operation of the electric working machine 1. The series of processes illustrated in FIGS. 4A and 4B is repeatedly executed by the CPU 7a at a predetermined cycle in accordance with a software program stored in advance in the memory 7b of the controller 7 in FIG. 1. In FIGS. 4A and 4B, for simplicity, the battery packs are represented by "BPs", the one battery pack 31 is represented by a "first BP", and the other battery 32 is represented by a "second BP" (the same applies to FIG. 5 described below).

For example, when the battery unit 30 is not being discharged or charged (the electric motor 9 (FIG. 1) is in stop), or when the starter switch 8 (FIG. 1) is turned on, the controller 7 compares results of monitoring the battery packs 31 and 32 obtained by the BMUs 31b and 32b (FIG. 1) (S1 in FIG. 4A). Then, the controller 7 checks the presence or absence of abnormality (error) of all of the battery packs 31 and 32 from the comparison result.

The presence or absence of abnormality of the battery packs 31 and 32 is determined by, for example, the BMUs 31b and 32b, based on the results of detection of the voltages, the currents, the terminal voltages of the internal cells, the temperatures, or the like of the battery packs 31 and 32, and is notified to the controller 7. As another example, the controller 7 may determine the presence or absence of abnormality of the battery packs 31 and 32, based on data of the voltages, the currents, the terminal voltages of the internal cells, the temperatures, or the like of the battery packs 31 and 32, or the like, which is transmitted from the BMUs 31b and 32b. Also when the controller 7 cannot normally communicate with the BMUs 31b and 32b, it may be determined that an abnormality is present in the battery packs 31 and 32.

For example, the controller 7 confirms the absence of abnormality of all of the battery packs 31 and 32 (S2: YES). In this case, the controller 7 compares the remaining power levels of the battery packs 31 and 32, which are monitored by the BMUs 31b and 32b.

If the remaining power level of the first battery pack 31 is greater than or equal to the remaining power level of the second battery pack 32 (S3: YES), the controller 7 selects the first battery pack 31 having a high remaining power level as a discharging battery pack, and selects the second battery pack 32 having a low remaining power level as a charging battery pack (S4). The selection is recorded in, for example, an internal memory of the CPU 7a (or the memory 7b).

If the remaining power level of the first battery pack 31 is smaller than the remaining power level of the second battery pack 32 (S3: NO), the controller 7 selects the second battery pack 32 having a high remaining power level as the discharging battery pack, and selects the first battery pack 31 having a low remaining power level as the charging battery pack (S5). The selection is also recorded in the internal memory of the CPU 7a or the like.

On the other hand, for example, the controller 7 confirms that an abnormality is present in one of the battery packs 31 and 32 (S2: NO), and that no abnormality is present in the first battery pack 31 and an abnormality is present in the second battery pack 32 (S6: YES). In this case, the controller 7 selects the first battery pack 31 as the discharging battery pack in a discharging mode and as the charging battery pack in a charging mode (S7). The selection is also recorded in the internal memory of the CPU 7a or the like.

Further, for example, the controller 7 confirms that an abnormality is present in one of the battery packs 31 and 32 (S2: NO), and that an abnormality is present in the first battery pack 31 and no abnormality is present in the second battery pack 32 (S6: NO, S8: YES). In this case, the controller 7 selects the second battery pack 32 as the discharging battery pack in the discharging mode and as the charging battery pack in the charging mode (S9). The selection is also recorded in the internal memory of the CPU 7a or the like.

For example, if the controller 7 confirms that an abnormality is present in all of the battery packs 31 and 32 (S2: NO, S6: NO, S8: NO), the controller 7 determines that all of the battery packs 31 and 32 are unavailable (S10). The determined content is recorded in the internal memory of the CPU 7a or the like. In this case, the battery packs 31 and 32 are not discharged even if a transition to the discharging mode occurs after that. In addition, the battery packs 31 and 32 are not charged even if a transition to the charging mode occurs after that.

After step S4, S5, S7, or S9, the controller 7 determines the discharging mode for performing discharging on one of the battery packs 31 and 32 or the charging mode for performing charging of one of the battery packs 31 and 32.

At this time, for example, the controller 7 may determine the charging mode if the charging cable remains connected to the charging port 41, and determine the discharging mode if the charging cable does not remain connected to the charging port 41. Alternatively, the controller 7 may determine the discharging mode or the charging mode, based on a result of checking whether an instruction to switch to the discharging mode or the charging mode is input to the mode changeover switch 5c (FIG. 1). In this case, the operator performs a predetermined operation with the mode changeover switch 5c to give an instruction to switch to the discharging mode or the charging mode.

As another example, for example, the controller 7 may determine the discharging mode if the starter switch 8 is turned on (the electric working machine 1 is started), and may determine the charging mode if the starter switch 8 is not turned on. Alternatively, the controller 7 may determine the discharging mode or the charging mode, based on the operating state of the operation lever 5a or the operation switch 5b (FIG. 1) for operating the working device 20 or the traveling device 10.

If the controller 7 determines the discharging mode for performing discharging on one of the battery packs 31 and 32 (S11: YES in FIG. 4B), the controller 7 controls the connection switches 31a and 32a and the junction box 39 (FIG. 1) to supply (discharge) the electric power of the already selected discharging battery pack among the plurality of battery packs 31 and 32 to the inverter 38 and the DC-DC converter 40 (FIG. 1) (S12).

Specifically, for example, if the first battery pack 31 is selected as the discharging battery pack in step S4 or S7, in step S12, the controller 7 sets the connection switch 31a to the connected state, sets the connection switch 32a to the disconnected state, and further switches the connection state inside the junction box 39 to discharge the battery in the first battery pack 31 and supply the electric power of the battery to the inverter 38 and the DC-DC converter 40.

For example, if the second battery pack 32 is selected as the discharging battery pack in step S5 or S9, in step S12, the controller 7 sets the connection switch 32a to the connected state, sets the connection switch 31a to the disconnected state, and further switches the connection state inside the junction box 39 to discharge the battery in the second battery pack 32 and supply the electric power of the battery to the inverter 38 and the DC-DC converter 40.

Then, the controller 7 controls the inverter 38 to supply electric power from the inverter 38 to the electric motor 9 to drive the electric motor 9 (S13). As a result, hydraulic devices such as the hydraulic pumps P1 and P2, the control valves V1 to V8 of the control valve unit V, the hydraulic actuators C1 to C5, ML, MR, and MT, the unloading valve 58, and the operation valves PV1 to PV6 are made drivable. In addition, the working device 20 and the traveling device 10 are made operable.

Further, the controller 7 controls the DC-DC converter 40 to supply electric power from the DC-DC converter 40 to the low-voltage battery 33 (FIG. 1) to charge the low-voltage battery 33 at any time (S14). As a result, electric power for driving the electrical components included in the electric working machine 1 is ensured in the low-voltage battery 33.

Thereafter, for example, in response to the operator turning off the starter switch 8, the controller 7 determines that an instruction has been given to stop the electric motor 9, and controls the connection switches 31a and 32a and the junction box 39 to stop the supply of electric power from the discharging battery pack to the inverter 38, the electric motor 9, and the DC-DC converter 40. As a result, the discharging mode ends. Then, the electric motor 9 stops, the hydraulic devices P1, P2, V (V1 to V8), C1 to C5, ML, MR, MT, 58, and PV1 to PV6 stop, and the working device 20 and the traveling device 10 also stop. At this time, the controller 7 may cancel the selection of the discharging battery pack or the charging battery pack, that is, may erase the selection of the use of the battery packs 31 and 32, which is recorded in the internal memory of the CPU 7a or the like. Thereafter, the controller 7 executes the subsequent processing from step S1 again.

On the other hand, after step S4, S5, S7, or S9, if the controller 7 determines the charging mode for performing charging of one of the battery packs 31 and 32 (S15: YES), the controller 7 controls the connection switches 31a and 32a and the junction box 39 to further input the electric power input to the charging port 41 from the external power supply via the charging cable to the charging battery pack to charge the charging battery pack (S16).

Specifically, for example, if the first battery pack 31 is selected as the charging battery pack in step S5 or S7, in step S16, the controller 7 sets the connection switch 31a to the connected state, sets the connection switch 32a to the disconnected state, and further switches the connection state inside the junction box 39 to input the electric power input to the charging port 41 from the external power supply to the first battery pack 31 to charge the battery in the first battery pack 31.

For example, if the second battery pack 32 is selected as the charging battery pack in step S4 or S9, the controller 7 in step S16 sets the connection switch 32a to the connected state, sets the connection switch 31a to the disconnected state, and further switches the connection state inside the junction box 39 to input the electric power input to the charging port 41 from the external power supply to the second battery pack 32 to charge the battery in the second battery pack 32.

Thereafter, for example, upon being notified by the BMUs 31b and 32b that the charging battery pack has been charged to a predetermined level of capacity, the controller 7 controls the connection switches 31a and 32a and the junction box 39 to block the electric power input to the charging port 41 from the external power supply from being input to the charging battery pack, and the charging mode ends. At this time, the controller 7 may cancel the selection of the charging battery pack or the discharging battery pack, that is, may erase the selection of the use of the battery packs 31 and 32, which is recorded in the internal memory of the CPU 7a or the like. Thereafter, the controller 7 executes the subsequent processing from step S1 again.

In the embodiment illustrated in FIGS. 4A and 4B, whether the electric working machine 1 is in the discharging mode or the charging mode is determined after the discharging battery pack or the charging battery pack is selected. Conversely, the discharging battery pack or the charging battery pack may be selected after whether the electric working machine 1 is in the discharging mode or the charging mode is determined. Alternatively, for example, the discharging battery pack or the charging battery pack may be selected when the starter switch 8 is turned on or off.

While both the discharging battery pack and the charging battery pack are selected in steps S4, S5, S7, and S9 in FIG. 4A, only one battery pack for either discharging or charging may be selected instead.

Further, in the embodiment illustrated in FIGS. 4A and 4B, the discharging battery pack or the charging battery pack is selected based on the presence or absence of abnormality and the remaining power levels of the battery packs 31 and 32. However, as an alternative, the controller 7 may select the discharging battery pack or the charging battery pack, for example, based on the result of comparing the voltages, the currents, the terminal voltages of the internal cells, the temperatures, or the like of the battery packs 31 and 32, which are monitored by the BMUs 31b and 32b.

Alternatively, for example, the BMUs 31b and 32b or the controller 7 may monitor the degrees of deterioration or the histories of use (mainly, the frequencies of use) of the battery packs 31 and 32, and the controller 7 may select the discharging battery pack or the charging battery pack, based on the result of comparing the monitoring results. Alternatively, the controller 7 may select the discharging battery pack or the charging battery pack, based on a result of comparing two or more of the above-described monitoring parameters (the voltages, the currents, the terminal voltages of the internal cells, the temperatures, the presence or absence of error, the remaining power levels, the degrees of deterioration, and the histories of use) of the battery packs 31 and 32.

FIG. 5 is a flowchart illustrating a charge/discharge target switching operation of the electric working machine 1.

As described above, upon determining the discharging mode (S21: discharging mode), the controller 7 discharges the discharging battery pack (one of the battery packs 31 and 32) to supply electric power to the inverter 38 and the DC-DC converter 40 (FIG. 1) (S22). During discharging, the controller 7 checks the remaining power level of the discharging battery pack, which is monitored by the BMU 31b or 32b, at a predetermined cycle. If the remaining power level of the discharging battery pack decreases to a predetermined first threshold or less (S23: YES), the controller 7 checks the remaining power levels of the other battery packs, which are monitored by the BMUs 31b and 32b, and switches the discharging battery pack to the battery pack having the largest remaining power level (the other of the battery packs 31 and 32) among the other battery packs (S24).

The first threshold may be set as appropriate in consideration of, for example, the amount of electric power required to change the electric working machine 1 to a safe posture, the amount of electric power required to switch the discharging battery pack to another battery pack, the amount of electric power required to move the electric working machine 1 to a place where charging is ready, or the like, or may be set to zero.

In step S24, for example, the controller 7 stops the discharge of the battery pack used as the discharging battery pack by the BMUs 31b and 32b, and then controls the connection switches 31a and 32a and the junction box 39 to switch the source from which electric power is to be supplied to the inverter 38 and the DC-DC converter 40 to the battery pack newly set as the discharging battery pack. Then, the controller 7 discharges the new discharging battery pack to supply electric power to the inverter 38 and the DC-DC converter 40 (S22). The discharging battery pack continues to be discharged if the discharging mode does not end (S25: NO).

On the other hand, as described above, if the controller 7 determines the charging mode (S21: charging mode), the controller 7 charges the charging battery pack with the electric power input from the external power supply via the charging port 41 or the like (S26). During charging, the controller 7 checks the remaining power level of the discharging battery pack, which is monitored by the BMU 31b or 32b, at a predetermined cycle. If the remaining power level of the discharging battery pack becomes greater than or equal to a predetermined second threshold (S27: YES), the controller 7 checks the remaining power levels of the other battery packs, which are monitored by the BMUs 31b and 32b, and switches the discharging battery pack to the battery pack having the smallest remaining power level among the other battery packs (S28).

The second threshold may be set to a value corresponding to the fully charged state of the battery packs 31 and 32 to be charged, or may be set as appropriate in accordance with the charging and discharging characteristics of the battery packs 31 and 32.

In step S28, for example, the controller 7 stops the charge of the battery pack used as the charging battery pack by the BMUs 31b and 32b, and then controls the connection switches 31a and 32a and the junction box 39 to switch the destination to which electric power is to be input from the external power supply to the battery pack newly set as the charging battery pack. Then, the controller 7 charges the new charging battery pack with the electric power input from the external power supply (S26). The charging battery pack continues to be charged if the charging mode does not end (S29: NO).

In the embodiment described above, the case where the two battery packs 31 and 32 are mounted on the electric working machine 1 is taken as an example. Instead of this, three or more battery packs may be mounted on the electric working machine 1. In this case, for example, among the battery packs having no abnormality, the battery pack having the highest remaining power level may be selected as the discharging battery pack. Further, among the other remaining battery packs, at least one normal battery pack may be selected as the charging battery pack, or the battery pack having the smallest remaining power level may be selected as the charging battery pack.

For example, in the discharging mode, it is preferable not to simultaneously supply electric power of a plurality of battery packs to one electric device to which electric power is to be supplied, to prevent a failure caused by overcurrent. In the charging mode, it is preferable not to input electric power to a plurality of battery packs from the external power supply through the same power supply wiring.

The embodiment described above has described a configuration in which the electric motor 9 is driven by the electric power from the battery packs 31 and 32, the hydraulic pumps P1 and P2 are driven by the power of the electric motor 9, the hydraulic actuators C1 to C5, ML, MR, and MT are driven by the hydraulic fluid delivered from the hydraulic pumps P1 and P2, and the working devices 20 and 10 are driven by the power of the hydraulic actuators C1 to C5, ML, MR, and MT. However, the present invention is not limited to this. For example, a configuration may be used in which some or all of the actuators included in the working devices 20 and 10 are electric actuators, the electric actuators are driven by the electric power of the battery packs 31 and 32, and the working devices 20 and 10 are driven by the power of the electric actuators.

Electric working machines 1 according to embodiments achieve the following effects.

An electric working machine 1 according to an embodiment includes: battery packs 31, 32; a working device 20, 10 (working device 20, traveling device 10) to be driven by electric power discharged from the battery packs 31, 32; one or more battery monitors (BMU) 31b, 32b to monitor states of the battery packs 31, 32; and a controller 7 to control charging and discharging of the battery packs 31, 32, wherein ,in a discharging mode for driving the working device 20, 10, the controller 7 selects one of the battery packs 31, 32 as a discharging battery pack to be discharged to supply electric power to the working device 20, 10, based on a result of monitoring the battery packs 31, 32 by the one or more battery monitors 31b, 32b, and in a charging mode for charging the battery packs 31, 32, the controller 7 selects one of the battery packs 31, 32 as a charging battery pack to be charged, based on the result of monitoring the battery packs 31, 32 by the one or more battery monitors 31b, 32b.

The configuration described above enables a battery pack suitable for the discharging mode or the charging mode to be selected in each of the discharging and charging modes, based on the states of the battery packs 31, 32. Therefore, it is possible to efficiently use a plurality of battery packs.

The one or more battery monitors 31b, 32b monitor remaining power levels of the battery packs 31, 32. The controller 7 selects, in the discharging mode, one of the battery packs 31, 32 that has a highest remaining power level as the discharging battery pack. This makes it possible to perform work for a long time using electric power from a single battery pack, making it possible to reduce downtime resulting from e.g., changing battery packs and perform work efficiently.

In the discharging mode, the controller 7 switches the discharging battery pack to one of other one or more of the battery packs that has a highest remaining power level when the remaining power level of the one of the battery packs used as the discharging battery pack decreases to a first threshold or less, the other one or more of the battery packs being other than the one of the battery packs used as the discharging battery pack. This reduces the frequency of switching the battery packs 31 and 32 to be discharged, and improving work efficiency.

The controller 7 selects, in the charging mode, one of the battery packs 31, 31 that has a lowest remaining power level as the charging battery pack. This makes it possible to charge a battery pack having a low remaining power level with priority.

In the charging mode, the controller 7 switches the charging battery pack to one of other one or more of the battery packs 31, 32 that has a lowest remaining power level when the remaining power level of the charging battery pack being charged becomes greater than or equal to a second threshold, the other one or more of the battery packs being other than the charging battery pack. This makes it possible to automatically charge the battery packs 31, 32 such that battery packs with lower remaining power levels are charged first.

The one or more battery monitors 31b, 32b monitor the battery packs 31, 32 for abnormality. The controller 7 selects, as the discharging battery pack or the charging battery pack, one of one or more of the battery packs 31, 32 that have no abnormality. This makes it possible to efficiently use a battery pack having no abnormality without using a battery pack having an abnormality.

The electric working machine 1 further includes a charging port 41 to be connected to an external power supply. The controller 7 determines that the electric working machine 1 is in the charging mode when the external power supply is connected to the charging port 41, and determines that the electric working machine 1 is in the discharging mode when the external power supply is not connected to the charging port 41. This makes it possible to automatically switch between the discharging mode and the charging mode according to whether the external power supply is connected to the charging port 41, and to select an efficient discharging battery pack or charging battery pack.

The electric working machine 1 further includes a mode changeover switch to input an instruction to switch between the discharging mode and the charging mode. This allows the operator to switch between the discharging mode and the charging mode, as desired, to discharge the discharging battery pack or charge the charging battery pack.

Note that the electric working machine 1 may include a display to display the remaining power levels of the battery packs 31, 32 or the remaining power level of the battery pack 31, 32 in use. This allows the operator to see the display on the display to know the remaining power levels of the battery packs 31, 32, and to appropriately select the discharging mode or the charging mode by using the mode changeover switch.

The electric working machine 1 further includes a starter switch 8 to start the electric working machine 1. The controller 7 selects the discharging battery pack or the charging battery pack based on the result of monitoring the states of the battery packs 31, 32 acquired from the one or more battery monitors 31b, 32b, in response to a predetermined operation on the starter switch 8 to give an instruction to start the electric working machine 1. This makes it possible to select a battery pack suitable for discharging or charging according to the states of the battery packs 31, 32 when the electric working machine 1 is started.

The embodiment described above has described an example in which the present invention is applied to the electric working machine 1 such as a backhoe. However, the target to which the present invention is to be applied is not limited to this. For example, the present invention may be applied to any other construction machine such as a wheel loader, a compact track loader, or a skid-steer loader, or may be applied to an agricultural machine such as a tractor, a combine, a rice transplanter, or a lawn mower.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: Electric working machine
- 5c: Mode changeover switch
- 7: Controller
- 8: Starter switch
- 10: Traveling device (working device)
- 20: Working device
- 31: Battery pack, first battery pack
- 31b: BMU (battery monitor)
- 32: Battery pack, second battery pack
- 32b: BMU (battery monitor)
- 41: Charging port

## Claims

1. An electric working machine comprising:
battery packs;
a working device to be driven by electric power discharged from the battery packs;
one or more battery monitors to monitor states of the battery packs; and
a controller to control charging and discharging of the battery packs, wherein
in a discharging mode for driving the working device, the controller selects one of the battery packs as a discharging battery pack to be discharged to supply electric power to the working device, based on a result of monitoring the battery packs by the one or more battery monitors, and
in a charging mode for charging the battery packs, the controller selects one of the battery packs as a charging battery pack to be charged, based on the result of monitoring the battery packs by the one or more battery monitors.

2. The electric working machine according to claim 1, wherein
the one or more battery monitors monitor remaining power levels of the battery packs, and
the controller selects, in the discharging mode, one of the battery packs that has a highest remaining power level as the discharging battery pack.

3. The electric working machine according to claim 2, wherein, in the discharging mode, the controller switches the discharging battery pack to one of other one or more of the battery packs that has a highest remaining power level when the remaining power level of the one of the battery packs used as the discharging battery pack decreases to a first threshold or less, the other one or more of the battery packs being other than the one of the battery packs used as the discharging battery pack.

4. The electric working machine according to any one of claims 1 to 3, wherein
the one or more battery monitors monitor remaining power levels of the battery packs, and
the controller selects, in the charging mode, one of the battery packs that has a lowest remaining power level as the charging battery pack.

5. The electric working machine according to claim 4, wherein, in the charging mode, the controller switches the charging battery pack to one of other one or more of the battery packs that has a lowest remaining power level when the remaining power level of the charging battery pack being charged becomes greater than or equal to a second threshold, the other one or more of the battery packs being other than the charging battery pack.

6. The electric working machine according to any one of claims 1 to 5, wherein
the one or more battery monitors monitor the battery packs for abnormality,
and
the controller selects, as the discharging battery pack or the charging battery pack, one of one or more of the battery packs that have no abnormality.

7. The electric working machine according to any one of claims 1 to 6, further comprising a charging port to be connected to an external power supply, wherein
the controller determines that the electric working machine is in the charging mode when the external power supply is connected to the charging port, and determines that the electric working machine is in the discharging mode when the external power supply is not connected to the charging port.

8. The electric working machine according to any one of claims 1 to 7, further comprising a mode changeover switch to input an instruction to switch between the discharging mode and the charging mode.

9. The electric working machine according to any one of claims 1 to 8, further comprising a starter switch to start the electric working machine, wherein
the controller selects the discharging battery pack or the charging battery pack based on the result of monitoring the states of the battery packs acquired from the one or more battery monitors, in response to a predetermined operation on the starter switch to give an instruction to start the electric working machine.
